# EUROPÄISCHE PATENTANMELDUNG

(11) **EP 1 033 514 A1**
(43) Veröffentlichungstag der Anmeldung: **06.09.2000**
(21) Anmeldenummer: 99104143.5
(22) Anmeldetag: 02.03.1999
(51) Int. Cl.: F16K 3/18

(54) **Schieberventil**

(71) Anmelder: Erfin Aktiengesellschaft, 9490 Vaduz (LI)
(72) Erfinder:
(74) Vertreter: Kaminski, Susanne, Dr.

(57) **Zusammenfassung**

Das Schieberventil umfasst einen Rahmen (2), eine verschiebbare Verschlussplatte (7) zum Verschliessen und Freigeben einer Durchtrittsöffnung (6) durch den Rahmen (2) und eine Betätigungsvorrichtung mit einem Antriebselement (9) zum Bewegen der Verschlussplatte (7) zwischen einer Offenlage und einer Schliesslage. Die Betätigungsvorrichtung umfasst eine Übertragungsvorrichtung (8), welche die Verschlussplatte (7) im Bereich der Schliesslage im wesentlichen senkrecht zur Ebene der Durchtrittsöffnung (6) und im restlichen Bewegungsbereich etwas von der Berandung der Durchtrittsöffnung (6) beabstandet im wesentlichen parallel zu dieser bewegbar macht. Um die gewünschte Bewegung der Verschlussplatte (7) zu erzielen, sind zwischen der Verschlussplatte (7) und dem Antriebselement (9) mindestens zwei, insbesondere aber vier, Schwenkhebel (15) angeordnet, wobei jeder Schwenkhebel (15) als Verbindung zum Antriebselement (9) ein erstes Schwenkgelenk (14) und als Verbindung zur Verschlussplatte (7) ein zweites Schwenkgelenk (16) aufweist. Im Bereich der Schliesslage steht die Verschlussplatte (7) an einem Anschlag (20) an und wird bei der weiteren Betätigung des Antriebselementes (9) durch die Schwenkhebel (15) gegen die entsprechende Druchtrittsöffnung (6) bewegt. Dieses Schieberventil ist vielseitig einsetzbar, einfach aufgebaut, einfach zu betätigen und im wesentlichen verschleissfrei.

## Beschreibung

Die Erfindung bezieht sich auf ein Schieberventil nach dem Oberbegriff des Anspruches 1.

Schieberventile werden in den verschiedensten Bereichen eingesetzt. Sie ermöglichen es, eine Öffnung bzw. einen Kanal wahlweise offenzuhalten oder zu verschliessen. Die Schieberventile umfassen dazu einen Rahmen, eine verschiebbare Verschlussplatte zum Verschliessen und Freigeben einer Durchtrittsöffnung durch den Rahmen und eine Betätigungsvorrichtung mit einem Antriebselement zum Bewegen der Verschlussplatte entlang der Durchtrittsöffnung zwischen einer Offenlage und einer Schliesslage. Entsprechend der jeweiligen Anwendung werden mechanische, elekromechanische, oder aber fluidische Antriebselemente eingesetzt. Wenn ein möglichst dichtes Verschliessen gewährleistet werden soll, so muss zwischen der Berandung der Durchtrittsöffnung und der Verschlussplatte eine Dichtungsanordnung ausgebildet werden. Die Verschlussplatte wird nun im Reibungskontakt mit der Dichtungsanordnung verschoben, was mit einer hohen Abnützung der Dichtung und insbesondere mit Beschädigungen derselben verbunden ist. Zudem muss ein Antriebselement mit einer grossen Betätigungskraft eingesetzt werden.

Um die unerwünschte Reibung zwischen der Verschlussplatte und einer Dichtung zu vermeiden, werden Schieberventile mit aufblasbaren Dichtungen verwendet. Während der Bewegung der Verschlussplatte darf die Dichtung nicht mit Druckluft beaufschlagt sein, sondern sie muss ihre kleinstmögliche Ausdehnung haben, damit sie nicht bis zur Verschlussplatte vorsteht. Wenn die Verschlussplatte in der Schliesslage ist, muss die Dichtung immer aufgeblasen sein, weil sonst kein dichter Verschluss gewährleistet ist. Dazu muss eine Druckluftquelle und eine Steuerung vorgesehen werden, was bei vielen Anwendungen des Schieberventils aufgrund des zu aufwendigen Aufbaus und der zu grossen Störanfälligkeit nicht akzeptierbar ist.

Anstelle des Schieberventiles könnte etwa ein Ventil eingesetzt werden, bei dem das Verschlussorgan senkrecht auf die Öffnung zu und von dieser wegbewegbar ist. Bei einer solchen Lösung besteht aber das Problem darin, dass die Öffnung nicht frei zugänglich ist.

In einer bevorzugten Anwendung soll das Schieberventil eine Kammer verschliessen in der ein Vakuum aufbaubar sein muss. So wird beispielsweise zum Isolieren der elektrischen Anschlüsse eines Motors, dieser eine Kammer eingeführt. Dann wird die Kammer dicht verschlossen und darin ein Vakuum aufgebaut, bevor ein isolierendes Harz bzw. eine Beschichtungsflüssigkeit in die Kammer eingefüllt wird. Nach der Benetzung des Motors bzw. dessen zu isolierenden Teile, muss das Harz aus der Kammer ausgebracht werden, vorzugsweise in dem eine Abfliessöffnung und eine Lufteintrittsöffnung geöffnet wird. Nach einer Trocknungs- und/oder Heizbehandlung ist die Isolierung beendet. Um eine serielle Bearbeitung duchführen zu können, ist es zweckmässig, wenn die Kammer eine Ein- und eine gegenüberliegende Austrittsöffnung umfasst. Beide Öffnungen sollen dann mit dicht verschliessbaren Schieberventilen versehen werden.

In weiteren Anwendungen ist es möglich dass beidseits des Schieberventils eine Kammer ist, wobei vorzugsweise in jeder einzelnen der Kammern ein Vakuum aufbaubar sein soll. Das Schieberventil muss dabei insbesondere ein dichtes Verschliessen der Öffnung zwischen den Kammern unabhängig von den jeweiligen Drücken in den beiden Kammern erzielbar machen.

Der Erfindung liegt nun die Aufgabe zugrunde, ein Schieberventil zu finden, das dicht abschliesst, einfach aufgebaut und zu bedienen ist, das in den verschiedensten Anwendungen und über lange Zeit betriebssicher und im wesentlichen verschleissfrei einsetzbar ist.

Diese Aufgabe wird durch die Merkmale des Anspruches 1 gelöst. Die abhängigen Ansprüche beschreiben alternative bzw. vorteilhafte Ausführungsvarianten.

Bei der Lösung der Aufgabe wurde erkannt, dass die eigentliche Schiebebewegung der Verschlussplatte im wesentlichen kontaktfrei bzw. ohne Reibungskontakt durchführbar sein soll. Entsprechend muss die Betätigungsvorrichtung eine Übertragungsvorrichtung umfassen, welche die Verschlussplatte im Bereich der Schliesslage im wesentlichen senkrecht zur Ebene der Durchtrittsöffnung und im restlichen Bewegungsbereich etwas von der Berandung der Durchtrittsöffnung beabstandet im wesentlichen parallel zu dieser bewegbar macht. Die aneinander anschliessenden Bewegungen in den beiden zueinander im wesentlichen senkrechten Richtungen können aufgrund der Übertragungsvorrichtung mit einem Antriebselement bzw. einer Antriebsachse erzielt werden. Vorzugsweise ist der Verschlussplatte ein am Rahmen ausgebildeter Anschlag zugeordnet, der beim Schliessvorgang die Bewegung der Verschlussplatte parallel zur Ebene der Durchtrittsöffnung im Bereich ihrer Schliesslage begrenzt und den weiteren Antrieb durch das Antriebselement mit einer Annäherungsführung der Übertragungsvorrichtung in eine Bewegung der Verschlussplatte zur Durchtrittsöffnung übertragbar macht. Es versteht sich von selbst, dass verschiedene Ausführungsformen der Annäherungsführung einsetzbar sind.

Eine bevorzugte Annäherungsführung für die Verschlussplatte umfasst mindestens zwei, insbesondere aber vier, Schwenkhebel, wobei jeder Schwenkhebel als Verbindung zum Antriebselement bzw. zu dessen Antriebsstange ein erstes Schwenkgelenk mit einer zur Verschiebungsrichtung senkrechten ersten Schwenkachse und als Verbindung zur Verschlussplatte ein zweites Schwenkgelenk mit einer zur ersten Schwenkachse parallelen zweiten Schwenkachse aufweist, so dass die Verschlussplatte beim Anstehen am Anschlag durch die Schwenkhebel gegen die Druchtrittsöffnung bewegbar ist. Die Schwenkhebel bilden eine Parallelogrammverbindung zwischen der Verschlussplatte und der Antriebsstange. Wenn die Antriebsstange im wesentlichen vertikal verläuft und die ersten Schwenkachsen über den entsprechenden zweiten angeordnet sind, so bleibt die Verschlussplatte bevor sie am Anschlag ansteht aufgrund ihres Eigengewichtes bei der Antriebsstange. Bei Ausführungsformen mit horizontalen Antriebsstangen, muss die Verschlussplatte gegebenenfalls mit einer Federeinrichtung bei der Antriebsstange gehalten werden. Entsprechend wird die Federeinrichtung beim Erreichen des Anschlages, bzw. beim Ausschwenken der Verschlussplatte zur Durchtrittsöffnung, gespannt.

Um zu verhindern, dass sich die Verschlussplatte im geschlossenen Zustand beispielsweise aufgrund einer Druckdifferenz von der Durchtrittsöffnung abheben kann, muss die Antriebsstange möglichst starr geführt sein. In einer bevorzugten Ausführungsform ist eine zweite Durchtrittsöffnung und eine zweite Verschlussplatte mit einer zweiten Parallelogrammverbindung vorgesehen, wobei die Durchtrittsöffnungen und die Verschlussplatten bezüglich einer Mittelebene spiegelbildlich angeordnet sind. Die beiden Parallelogrammverbindungen sind mit einer gemeinsamen Antriebsstange verbunden. Weil nun die Verschlussplatten von der Mittelebene her je gegen die aussenliegenden Berandungen der entsprechenden Durchtrittsöffnungen gepresst werden, ist ein sehr dichter und sicherer Verschluss gewährleistet. Diese Ausführungsform ist vielseitig einsetzbar, einfach aufgebaut, einfach zu betätigen und im wesentlichen verschleissfrei.

Es versteht sich von selbst, dass auch Annäherungsführungen möglich sind, die anstelle der Schwenkhebel andere Führungsanordnungen vorsehen. Beispielsweise können mit der Antriebsstange verbundene Keile bzw. Rampen mit entsprechenden Pressflächen der Verschlussplatte zusammenwirken, wobei die Keile zur Antriebsachse geneigt verlaufen. Die Anpresswirkung bzw. die Zustellwirkung solcher Keile bzw. Rampen wird analog zur Lösung mit Schwenkhebeln beim Anstehen der Verschlussplatte am Anschlag erzielbar.

Die Zeichnungen erläutern die Erfindung anhand von Ausführungsbeispielen. Dabei zeigt
- Fig. 1a: eine Frontansicht eines Schieberventils
- Fig. 1b: einen horizontalen Schnitt durch ein Schieberventil, wobei auf der linken Hälfte der offene und auf der rechten Hälfte der geschlossene Zustand dargestellt ist
- Fig. 2a, 2b und2c: je einen Querschnitt durch das Schieberventil im geschlossenen Zustand, beim Öffnen und im offenen Zustand
- Fig. 3a und 3b: vergrösserte Ausschnitte aus den Fig. 2a und 2b
- Fig. 4: eine Ansicht der Halterung für die Verschlussplatten
- Fig. 5: vergrösserter Ausschnitt aus der Fig. 2b
- Fig. 6a: eine Innenansicht des Rahmens eines Schieberventils
- Fig. 6b: einen horizontalen Schnitt durch einen Rahmenteil eines Schieberventils
- Fig. 7: schematische Draufsicht auf ein Schieberventil mit horizontaler Betätigungsrichtung

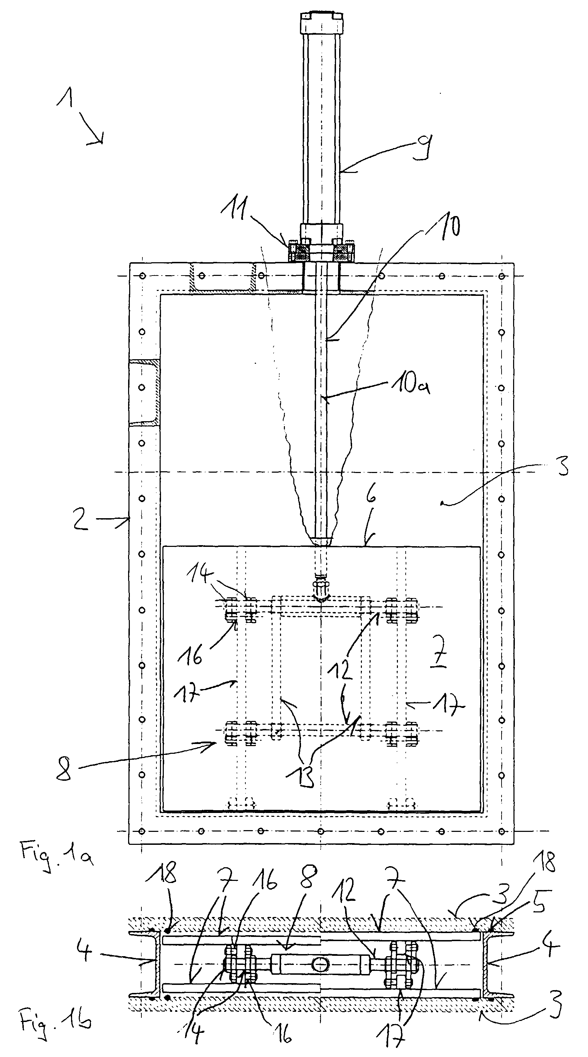

Fig. 1a und 1b zeigt ein Schieberventil 1 mit einem Rahmen 2, der zwei voneinander beabstandete Frontplatten 3 und entlang der äusseren Berandung der Frontplatten 3 Stegteile 4 umfasst. Die Stegteile 4 sind vorzugsweise nach aussen offene C-Profile, die mit den Frontplatten 3 dicht verbunden sind. Insbesondere sind zwischen den Stegteilen 4 und den Frontplatten 3 Rahmendichtungen 5 eingesetzt. Im unteren Halbbereich der beiden Frontplatten sind Durchtrittsöffnungen 6 deckungsgleich ausgebildet. Die Durchtrittsöffnungen 6 können von verschiebbaren Verschlussplatten 7 verschlossen oder geöffnet werden. Zum Bewegen der Verschlussplatten 7 zwischen einer Offenlage und einer Schliesslage ist eine Betätigungsvorrichtung mit einem Antriebselement 9 vorgesehen. Die Verschlussplatten 7 sind zwischen den beiden Frontplatten 3 je den Frontplatten 3 bzw. den Durchtrittsöffnungen 6 zugewandt angeordnet und über eine Übertragungsvorrichtung 8 zum Bewegen der Verschlussplatten 7 zwischen einer Offenlage und einer Schliesslage mit einem bewegbaren Betätigungsstab 10 des Antriebselementes 9 verbunden. Die Übertragungsvorrichtung 8 macht die Verschlussplatten 7 im Bereich der Schliesslage im wesentlichen senkrecht zu den Ebenen der Durchtrittsöffnungen und im restlichen Bewegungsbereich etwas von der Berandung der Durchtrittsöffnungen 6 beabstandet im wesentlichen parallel zu diesen bewegbar.

Das Antriebselement 9 ist vorzugsweise oben an einem Stegteil 4 des Rahmens 2 befestigt ist. Eine Befestigungsanordnung 11 ist insbesondere so ausgebildet, dass das Innere des Rahmens 2 nach aussen dicht verschlossen bleibt. Zwischen dem Stegteil 4 mit der Befestigungsanordnung 11 und den Durchtrittsöffnungen 6 ist ein von den Frontplatten 3 abgedeckter Aufnahmebereich zur vollständigen Aufnahme der Verschlussplatten 7 ausgebildet. Der Betätigungsstab 10 erstreckt sich zwischen den beiden Verschlussplatten 7 entlang einer Betätigungsachse 10a, die vorzugsweise in der Mittelebene zwischen den Frontplatten liegt. Mit dem freien Ende des Betätigungsstabes 10 sind vorzugsweise zwei senkrecht zur Betätigungsachse 10a verlaufende Querstäbe 12 angeordnet, die mittels zweier Verbindungsteile 13 oder gegebenenfalls mit einer Verbindungsplatte fest miteinander verbunden sind. An den freien Enden der Querstäbe 12 sind erste Schwenklager 14 für Schwenkhebel 15 ausgebildet. Die Schwenkhebel 15 sind über zweite Schwenklager 16 mit gegen innen vorstehenden Rippen 17 der Verschlussplatten 7 verbunden. Diese Parallelogrammverbindung zwischen der Verschlussplatte 7 und der Antriebsstange 10 bildet eine Annäherungsführung der Übertragungsvorrichtung 8, mit der die Verschlussplatte 7 parallel zur Ebene der Durchtrittsöffnung 6 im wesentlichen senkrecht auf diese zu- und wegbewegbar ist.

Gemäss Fig. 1b sind die Verschlussplatten 7 vor dem vollständigen Schliessen von den Durchtrittsöffnungen 6 bzw. von den Frontplatten 7 beabstandet. Die dargestellte Ausführungsform umfasst zum Gewährleisten eines dichten Abschlusses zwei Öffnungsdichtungen 18, die je rund um eine Durchtrittsöffnung 6 verlaufen. Der Abstand zwischen den Frontplatten 3 und den zugeordneten Verschlussplatten 7 ist vor dem vollständigen Schliessen so gewählt, dass auch zwischen den vorstehenden öffnungsdichtungen 18 und den Verschlussplatten 7 je ein Freiraum besteht. Nach dem vollständigen Schliessen liegen die Verschlussplatten 7 dicht an den Öffnungsdichtungen 18 an.

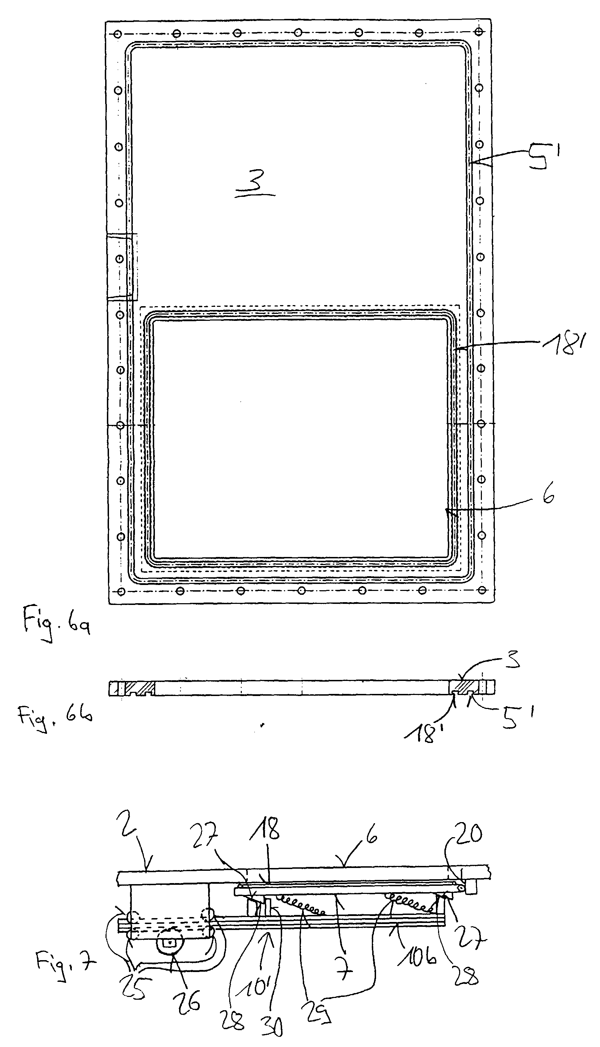

Fig. 6a und 6b zeigen die Innenseite einer Frontplatte 3 mit einer ersten Nut 5' für die Rahmendichtung 5 und einer zweiten Nut 18' für die Öffnungsdichtung 18. Es versteht sich von selbst, dass die zum Aufnehmen der Dichtung benötigte Nut gegebenenfalls auch an den Stegteilen 4 bzw. an der Verschlussplatte 7 ausgebildet werden kann.

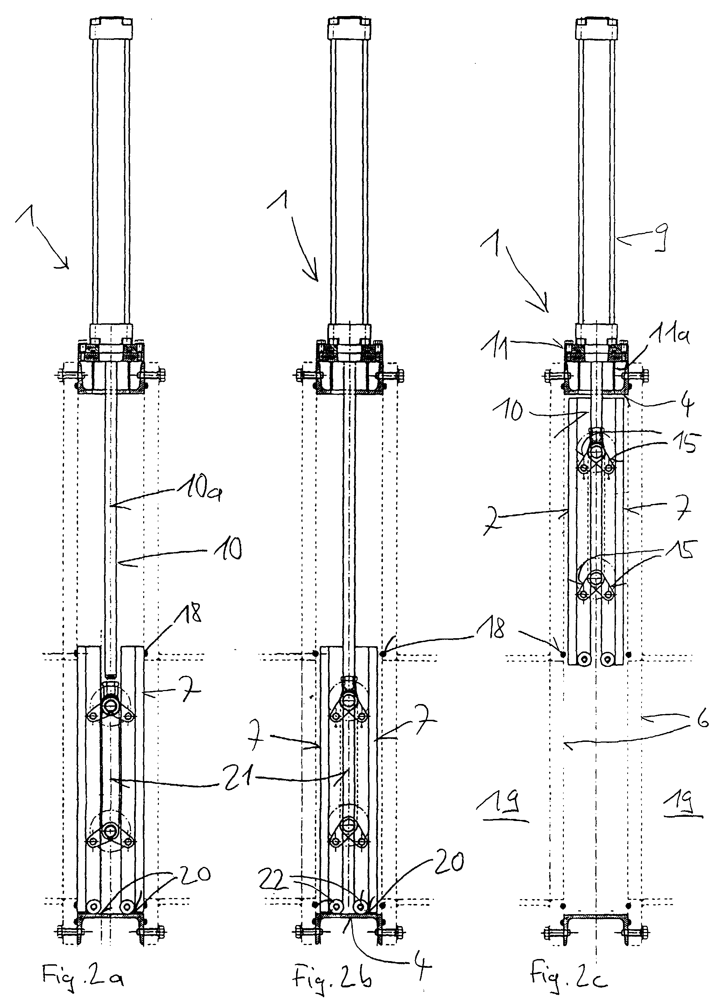

Fig. 2a, 2b und 2c veranschaulichen den Schliess- bzw. Öffnungsvorgang des Schieberventils 1. Im offenen Zustand des Schieberventils 1 ist gemäss Fig. 2c die Antriebsstange 10 soweit in den zweiseitig betätigbaren Zylinder bzw. in die Antriebseinheit 9 aufgenommen, dass der obere Rand der Verschlussplatten 7 nahe beim oberen Stegteil 4 steht. Die Verschlussplatten 7 erstrecken sich nur bis zum oberen Rand der Durchtrittsöffnungen 6. Die Durchtrittsöffungen 6 sind vollständig frei. Um bei offenem Ventil 1 die über die Durchtrittsöffnungen 6 miteinander verbundenen beidseits an das Schieberventil 1 anschliessenden Kanalbereiche 19 gegen die Umgebung dicht abzuschliessen, ist das Antriebselement 9 über die Befestigungsanordnung 11 dicht mit dem Innenbereich des Schieberventils 1 verbunden. Dazu ist eine Hülse 11a um die Antriebsstange 10 angeordnet und dicht mit dem Stegteil 4 sowie mit der Befestigungsanordnung 11 verbunden. Aufgrund des Gewichtes der Verschlussplatten 7 sind diese in der tiefstmöglichen Lage in der sie aufgrund'der Stege 17 und der Lagerung mit den Schwenkhebeln 15 sein können. Aufgrund der Befestigung mit Schwenkhebeln 15 gewährleistet die tiefstmögliche Lage auch den grössten Abstand zwischen den Verschlussplatten 7 und den zugehörigen Frontplatten 3.

Beim Absenken der Verschlussplatten 7 entstehen keine Reibungskontakte zwischen den Verschlussplatten 7 und Rahmenteilen oder den Öffnungsdichtungen 18. Wenn die unteren Berandungen der Verschlussplatten 7 die Innenseite eines unteren Stegteiles 4 erreichen, bleiben die Verschlussplatten 7 an dem durch diese Innenseite am Rahmen 2 gebildeten Anschlag 20 stehen. Eine weitere Bewegung der Antriebsstange 10 nach unten führt dazu, dass die Verschlussplatten 7 von den nach aussen ausschwenkenden Schwenkhebel 15 nach aussen gegen die Berandungen der Durchtrittsöffnungen 6 bzw. gegen die Öffnungsdichtungen 18 gepresst werden. Aufgrund des bezüglich einer Mittelebene 21 symmetrischen Aufbaus wird die von der Antriebsstange 10 entlang der Antriebsachse 10a eingebrachte Schliesskraft symmetrisch auf beide Verschlussplatten 7 übertragen. Um die Bewegung der Verschlussplatten 7 am Anschlag 20 möglichst reibungsfrei durchführen zu können, umfasst jede Verschlussplatte 7 mindestens eine, vorzugsweise aber zwei Rollen 22, deren Rollflächen am Anschlag abrollbar sind. Gegebenenfalls wird anstelle der Rollen 22 eine reibungsarme Gleitfläche eingesetzt.

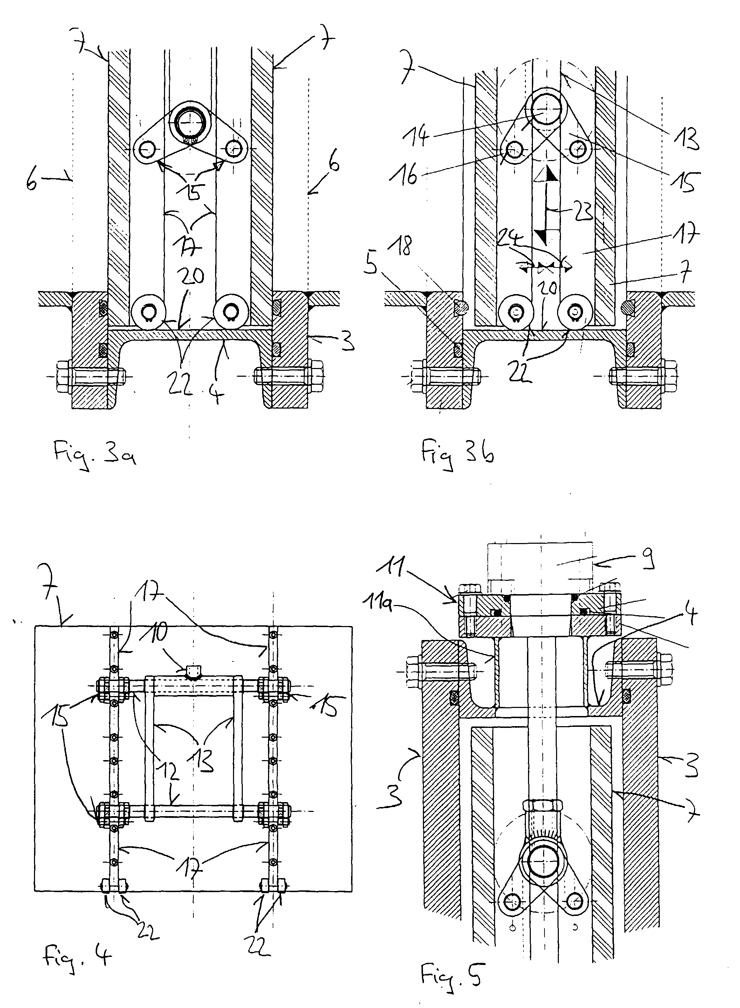

Der oben beschriebene Schliess- und Öffnungsvorgang ist auf den Fig. 3a und 3b anhand eines vergrösserten Ausschnittes deutlicher dargestellt. Im dicht geschlossenen Zustand gemäss Fig. 3a sind die Schwenkhebel 15 nach aussen geschwenkt. Die Rollen 22 sind an den Rippen 17 der Verschlussplatten 7 drehbar befestigt und stehen am Anschlag 20 an. Fig. 3b verdeutlicht, dass die Auf- oder Abwärtsbewegung 23 der Verbindungsteile 13 bei am Anschlag 20 anliegenden Rollen 22 aufgrund der Schenkhebel 15 mit ihren ersten und zweiten Schwenklagern 14 und 16 zu seitlichen Bewegungen 24 der Verschlussplatten 7 führt.

Fig. 4 verdeutlicht die Verbindung der Antriebsstange 10 mit der Verschlussplatte 7 mittels der Übertragungsvorrichtung 8, welche die Querstäbe 12, die Verbindungsteile 13, die Schwenkhebel 15 und die Rippen 17 umfasst.

Fig. 5 zeigt die Befestigung des Antriebselementes 9 am Stegteil 4. Um einen dichten Abschluss des Bereiches zwischen den beiden Frontplatten 3 zu gewährleisten, ist um die Durchführung der Antriebsstange eine Hülse 11a angeordnet und dicht mit dem Stegteil 4 sowie mit der Befestigungsanordnung 11 des Antriebselements 9 verbunden.

Es versteht sich von selbst, dass analog zum beschriebenen Schieberventil 1 mit zwei Verschlussplatten 7 auch Aussführungsformen mit lediglich einer Verschlussplatte 7 möglich sind. Um ein sicheres und festes Anpressen auch bei lediglich einer Verschlussplatte 7 zu gewährleisten, könnten sich die Verbindungsteile 13 beim Schliessen bis zu einer senkrecht vom Anschlag 20 nach oben stehenden Haltefläche erstrecken.

Die Haltefläche würde ein Ausschwenken der Verbindungsteile 13 aus der Vertikalen verhindern und dabei ein festes Anpressen der Verschlussplatte 7 ermöglichen.

Fig. 7 zeigt schematisch eine Lösung bei der der Rahmen 2 nur eine Durchtrittsöffnung 6 umfasst. Entsprechend ist auch nur eine Verschlussplatte 7 vorgesehen. In der dargestellten Ausführungsform ist eine Öffnungsdichtung 18 an der Verschlussplatte 7 angebracht. Anstelle eines beidseits mit Druckfluid betätigbaren Antriebselementes 9 können beliebige andere Antriebselemente, wie etwa Schrittmotoren, eingesetzt werden. In der dargestellten Ausführungsform wird anstelle einer Antriebsstange ein Antriebsprofil 10' eingesetzt, das seitliche Führungsstege 10b umfasst, andenen am Rahmen 2 gelagerte Führungsrollen 25 beidseits anpressbar sind. Um das mit den Führungsrollen 25 gelagerte Führungsprofil 10' antreiben zu können, ist eine reibungs- oder formschlüssig mit dem Führungsprofil 10' zusammenwirkende Antriebsrolle 26 im Bereich der Führungsrollen 25 vorgesehen. Mit dem Antriebsprofil 10' verbundene Keile bzw. Rampen 27 wirken mit entsprechenden Pressflächen 28 der Verschlussplatte 7 zusammen. Die Anpresswirkung bzw. die Zustellwirkung solcher Rampen 27 wird analog zur Lösung mit Schwenkhebeln beim Anstehen der Verschlussplatte 7 am Anschlag 20 erzielt. Bei der dargestellten Ausführungsform mit einem horizontal verlaufenden Antriebsprofil 10', wird die Verschlussplatte 7 mit einer Federeinrichtung 29 von der Durchtrittsöffnung 6 beabstandet am Antriebsprofil 10' gehalten. Eine Rückzugsbegrenzung 30 bestimmt in der Offenstellung die Lage der Verschlussplatte 7 relativ zum Antriebsprofil. Die Federeinrichtung 29 wird beim Erreichen des Anschlages 20, bzw. beim Ausschwenken der Verschlussplatte 7 zur Durchtrittsöffnung 6, gespannt. Dieses schematische Ausführungsbeispiel veranschaulicht, dass die erfinderische Lösung in den verschiedenartigsten Ausführungsformen realisiert werden kann.

## Patentansprüche

1. Schieberventil mit einem Rahmen (2), einer ersten verschiebbaren Verschlussplatte (7) zum Verschliessen und Freigeben einer ersten Durchtrittsöffnung (6) durch den Rahmen (2) und einer Betätigungsvorrichtung mit einem Antriebselement (9) zum Bewegen der Verschlussplatte (7) zwischen einer Offenlage und einer Schliesslage, **dadurch gekennzeichnet, dass** die Betätigungsvorrichtung eine Übertragungsvorrichtung (8) umfasst, welche die erste Verschlussplatte (7) im Bereich der Schliesslage im wesentlichen senkrecht zur Ebene der ersten Durchtrittsöffnung (6) und im restlichen Bewegungsbereich etwas von der Berandung der Durchtrittsöffnung (6) beabstandet im wesentlichen parallel zu dieser bewegbar macht.

2. Schieberventil nach Anspruch 1, dadurch gekennzeichnet, dass eine zweite verschiebbare Verschlussplatte (7) zum Verschliessen und Freigeben einer zweiten Durchtrittsöffnung (6) durch den Rahmen (2) vorgesehen ist, welche zweite Verschlussplatte (7) von der Übertragungsvorrichtung (8) im Bereich der Schliesslage im wesentlichen senkrecht zur Ebene der zweiten Durchtrittsöffnung (6) und im restlichen Bewegungsbereich etwas von der Berandung der zweiten Durchtrittsöffnung (6) beabstandet im wesentlichen parallel zu dieser bewegbar ist, wobei die beiden Durchtrittsöffnungen (6) voneinander beabstandet und die beiden Verschlussplatten (7) sowie die Übertragungsvorrichtung (8) zwischen den Ebenen der beiden Durchtrittsöffnungen (6) angeordnet sind.

3. Schieberventil nach Anspruch 1 oder 2, dadurch gekennzeichnet, dass jeder Verschlussplatte (7) ein am Rahmeh (2) ausgebildeter Anschlag (20) zugeordnet ist, der beim Schliessvorgang die Bewegung der Verschlussplatte (7) parallel zur Ebene der Durchtrittsöffnung (6) im Bereich ihrer Schliesslage begrenzt und den weiteren Antrieb durch das Antriebselement (9) mit einer Annäherungsführung der Übertragungsvorrichtung (8) in eine Bewegung der Verschlussplatte (7) zur Durchtrittsöffnung (6) übertragbar macht.

4. Schieberventil nach Anspruch 3, dadurch gekennzeichnet, dass die Annäherungsführung für jede Verschlussplatte (7) mindestens zwei, insbesondere aber vier, Schwenkhebel (15) aufweist, wobei jeder Schwenkhebel (15) als Verbindung zum Antriebselement (9) ein erstes Schwenkgelenk (14) mit einer zur Verschiebungsrichtung (10a) senkrechten ersten Schwenkachse, vorzugsweise in der Mittelebene (21) zwischen den Ebenen der beiden Durchtrittsöffnungen (6), und als Verbindung zur Verschlussplatte (7) ein zweites Schwenkgelenk (16) mit einer zur ersten Schwenkachse parallelen zweiten Schwenkachse aufweist, so dass jede Verschlussplatte (7) beim Anstehen am entsprechenden Anschlag (20) durch die Schwenkhebel (15) gegen die entsprechende Druchtrittsöffnung (6) bewegbar ist.

5. Schieberventil nach Anspruch 2, dadurch gekennzeichnet, dass jede Verschlussplatte (7) mit mindestens einer Rolle (22), gegebenenfalls aber mindestens einer Gleitfläche, mit dem entsprechenden Anschlag (20) in Kontakt bringbar ist, so dass die Bewegung der Verschlussplatte (7) senkrecht zur Durchtrittsöffnung (6) mit einer reibungsarmen Bewegung der Verschlussplatte (7) entlang des Anschlages einhergeht.

6. Schieberventil nach einem der Ansprüche 2 bis 5, dadurch gekennzeichnet, dass der Rahmen (2) zwei voneinander beabstandete Frontplatten (3) mit den Durchtrittsöffnungen (6) und entlang der äusseren Berandung der Frontplatten (3) Stegteile (4), vorzugsweise nach aussen offene C-Profile, zwischen den Frontplatten (3) umfasst, wobei die Stegteile (4) und die Frontplatten (3) vorzugsweise dicht miteinander verbunden sind.

7. Schieberventil nach Anspruch 6, dadurch gekennzeichnet, dass das Antriebselement (9) an einem Stegteil (4) des Rahmens (2) befestigt ist und einen Betätigungsstab (10) zwischen den beiden Frontplatten (3) entlang einer Betätigungsachse (10a), die vorzugsweise in der Mittelebene (21) liegt, bewegbar macht, der am freien Ende mit der Übertragungsvorrichtung (8), vorzugsweise mit zwei senkrecht zur Betätigungsachse (10a) verlaufenden Querstäben (12) mit den ersten Schwenklagern (14) der Schwenkhebel (15) verbunden ist.

8. Schieberventil nach einem der Ansprüche 1 bis 7, dadurch gekennzeichnet, dass zwischen jeder Verschlussplatte (7) und der Berandung der damit verschliessbaren Durchtrittsöffnung (6) eine Dichtungsanordnung ausgebildet ist, welche zumindest eine in einer Nut gehaltene Öffnungsdichtung (18) umfasst, wobei die Nut (18') vorzugsweise in der Berandung der Durchtrittsöffnung (6) ausgebildet ist.

9. Schieberventil nach einem der Ansprüche 1 bis 8, dadurch gekennzeichnet, dass das Antriebselement (9) ein zweiseitig betätigbares, fluidisches Zylinder-Kolben-Element ist, das vorzugsweise oben am Rahmen (2) angeordnet ist und eine im wesentlichen vertikale Antriebsachse (10a) hat.
